# EUROPÄISCHE PATENTSCHRIFT

(11) **EP 0 339 340 B1**
(45) Veröffentlichungstag und Bekanntmachung des Hinweises auf die Patenterteilung: **29.12.1999**
(21) Anmeldenummer: 89106236.6
(22) Anmeldetag: 08.04.1989
(51) Int. Cl.: C08G 61/12, H01M 4/60, C08J 7/04

(54) **Verfahren zur Herstellung von Polythiophenen**
Process for the preparation of Polythiophenes
Procédé pour la préparation de Polythiophènes

(30) Priorität: 22.04.1988 DE 3813589; 23.12.1988 DE 3843412
(43) Veröffentlichungstag der Anmeldung: 02.11.1989
(73) Patentinhaber: BAYER AG, 51368 Leverkusen (DE)
(72) Erfinder: Jonas, Friedrich, Dr., D-5100 Aachen (DE); Heywang, Gerhard, Dr., D-5060 Bergisch Gladbach 2 (DE); Schmidtberg, Werner, D-5090 Leverkusen 1 (DE); Heinze, Jürgen, Prof. Dr., D-7800 Freiburg (DE); Dietrich, Michael, D-7800 Freiburg (DE)

(56) Entgegenhaltungen:
- EP-A- 0 203 438
- EP-A- 0 257 573
- EP-A- 0 340 512
- SYNTHETIC METALS, 41-43 (1991), 503-506
- SYNTHETIC METALS, 55-57 (1993), 1603-1607

## Beschreibung

Die Erfindung betrifft die Herstellung von Polythiophenen mit hoher elektrischer Leitfähigkeit durch oxidative Polymerisation der entsprechenden Thiophene und ein Verfahren zur antistatischen Ausrüstung von den elektrischen Strom nicht leitenden Kunststoff-Substraten, insbesondere von Kunststoff-Formteilen.

Polythiophene, ihre Herstellung durch elektrochemische oder chemische Oxidation der entsprechenden Thiophene und die Verwendung der Polythiophene zur antistatischen Ausrüstung von den elektrischen Strom nicht oder nur schlecht leitenden Substraten sind bekannt; siehe z.B.:
(a) EP-A-0 206 133:
   Aus dieser ist ein Verfahren zum Aufbringen von Schichten aus mit Hilfe von Oxidationsmitteln erzeugten leitfähigen, polymeren, heterocyclischen Verbindungen auf den elektrischen Strom nicht oder schlecht leitende Substrate bekannt. Beschrieben wird jedoch nur die antistatitische Ausrüstung der Substrate mittels durch oxidative Polymerisation von Pyrrol auf den Substraten erzeugtem Polypyrrol;
(b) EP-A-0 253 594:
   In dieser Veröffentlichung sind spezielle in 3- und/oder 4-Stellung durch (substituierte) Alkyl- und/oder Alkoxy-Gruppen substituierte Thiophene und die aus ihnen durch chemische oder elektrochemische Oxidation erhaltenen elektrisch leitfähigen Polymere beschrieben. Die durch chemische Oxidation erhaltenen Polythiophene weisen gemäß den in der Veröffentlichung angegebenen Daten nur eine schlechte Leitfähigkeit auf;
(c) US-PS-4 521 589:
   Diese Veröffentlichung beschreibt die Herstellung von polymeren 3-Alkylthiophenen durch Umsetzung von 3-Alkyl-2,5-dihalogen-thiophenen mit Magnesium in Gegenwart von Nickelverbindungen in inerten organischen Lösungsmitteln. Die elektrische Leitfähigkeit der auf diese Weise erhaltenen undotierten Polythiophene wird mit 9 x 10⁻¹⁴ S/cm angegeben;
(d) EP-A-0 203 438 und EP-A-0 257 573:
   Beide Veröffentlichungen betreffen die Herstellung von in organischen Lösungsmitteln löslichen substituierten leitfähigen Polythiophenen und die Verwendung der Lösungen dieser löslichen Polythiophene zur antistatischen Ausrüstung den elektrischen Strom nicht oder nur schlecht leitender Substrate. Die Herstellung der löslichen substituierten leitfähigen Polythiophene bzw. deren Lösungen erfolgt durch elektrochemische Oxidation der entsprechenden substituierten Thiophene (EP-A 257 573) oder durch Umsetzung der entsprechenden 2,5-Dihalogenthiophene mit Magnesium in Gegenwart von Nickel-Katalysatoren (EP-A 203 438); das letztgenannte Verfahren ist in technischem Maßstab praktisch nicht durchführbar und die durch elektrochemischc Oxidation erhaltenen Polythiophene weisen nur eine niedrige Leitfähigkeit auf.

Überraschenderweise wurde gefunden, daß sich ein spezieller Typ 3,4-disubstituierter Polythiophene besonders für die antistatische Ausrüstung von den elektrischen Strom nicht oder schlecht leitender Substrate eignet, weil er eine hohe elektrische Leitfähigkeit aufweist und weil er außerdem auf besonders einfache Weise durch chemische Oxidation der ihm zugrundeliegenden 3,4-disubstituierten Thiophene mit üblichen Oxidationsmitteln unmittelbar auf den antistatisch auszurüstenden Substraten herstellbar ist. Es wurde nämlich gefunden, daß sich durch die Wahl des Oxidationsmittels die Polymerisationsgeschwindigkeiten der speziellen Thiophene variieren und dabei so einstellen lassen, daß Oxidationsmittel und substituierte Thiophene nicht mehr getrennt auf das antistatisch auszurüstende Substrat aufgebracht werden müssen, wie dies bislang bei der Antistatikausrüstung mit Polypyrrol erforderlich ist, sondern daß substituierte Thiophene und Oxidationsmittel zusammen in einer Lösung oder Druckpaste vereinigt auf die auszurüstenden Substrate aufgebracht werden können.

Die Erfindung betrifft daher ein Verfahren zur Herstellung von Polythiophenen, aufgebaut aus Struktureinheiten der Formel 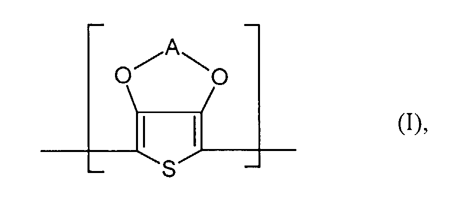 in der
- A: einen gegebenenfalls substituierten C₁-C₄-Alkylen-Rest bedeutet,
durch oxidative Polymerisation 3,4-disubstituierter Thiophene der Formel 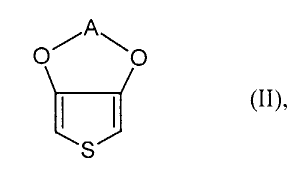 in der
- A: die unter Formel (I) angegebene Bedeutung hat,
wobei als Oxidationsmittel Fe(III)-Salze, H₂O₂, K₂Cr₂O₇, Alkaliperborate, KMnO₄, Alkali- oder Ammoniumpersulfate in Mengen von >2,25 Äquivalenten Oxidationsmittel pro Mol Thiophen eingesetzt werden, in einem unter den angewandten Reaktionsbedingungen inerten organischen Lösungsmittel und/oder Wasser.

Die Polythiophene sind vorzugsweise aus den Struktureinheiten der Formel (I) aufgebaut.

Als Vertreter der gegebenenfalls substituierten C₁-C₄-Alkylenreste seien vorzugsweise die Alkylen-1,2-Reste genannt, die sich von den 1,2-Dibrom-alkanen ableiten, wie sie beim Bromieren von α-Olefinen, wie Ethen, Propen-1, Hexen-1, Octen-1, Decen-1, Dodecen-1 und Styrol erhältlich sind; außerdem seien genannt der Cyclohexylen-1,2-, Butylen-2,3-, 2,3-Dimethylen-butylen-2,3- und Pentylen-2,3-Rest. Bevorzugte Reste sind der Methylen-, Ethylen-1,2- und Propylen-1,2-Rest.

Die oxidative Polymerisation auf chemischem Wege ist in sofern überraschend, weil in der EP-A 0 206 133 Pyrrol und Thiophen als in gleicher Weise oxidierbare Monomere beschrieben werden, es sich aber gezeigt hat, daß Thiophen durch die oxidative Polymerisation von Pyrrol geeignete Oxidationsmittel, z.B. FeCl₃, nicht polymerisierbar ist.

Die erfindungsgemäß hergestellten, aus den Struktureinheiten der Formel (I) aufgebauten Polythiophene eignen sich ausgezeichnet zur antistatischen Ausrüstung von den elektrischen Strom nicht oder nur schlecht leitenden Substraten. Die Polythiophene werden dabei vorzugsweise unmittelbar auf den antistatisch auszurüstenden Substraten nach dem vorstehend angegebenen Herstellungsverfahren erzeugt.

Die Erfindung betrifft daher weiterhin ein Verfahren zur antistatischen Ausrüstung von den elektrischen Strom nicht leitenden Kunststoff-Substraten, insbesondere von Kunstoff-Formteilen, durch Aufbringen einer Schicht aus clektrisch-lcitfähigen organischen Polymeren auf die Oberfläche der Substrate, dadurch gekennzeichnet, daß man auf der Oberfläche der Substrate durch chemisch oxidative Polymerisation gemäß Anspruch 1 eine Schicht aus Polythiophenen erzeugt, die aus Struktureinheiten der Formel 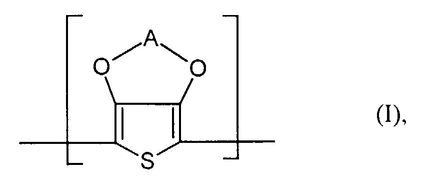 aufgebaut sind, in der
- A: einen gegebenenfalls substituierten C₁-C₄-Alkylen-Rest bedeutet.

Die für die Herstellung erforderlichen 3,4-disubstituierten Thiophene der Formel (II) sind zum Teil bekannt und/oder nach im Prinzip bekannten Verfahren durch Umsetzung der Alkalisalze der 3,4-Dihydroxy-thiophen-2,5-dicarbonsäureester mit den entsprechenden Alkylen-vic-dihalogeniden und nachfolgende Decarboxylierung der freien 3,4-(Alkylen-vic-dioxy-)-thiophen-2,5-dicarbonsäuren erhältlich (siehe z.B. Tetrahedron 1967 Vol. 23, 2437-2441 und J. Am. Chem. Soc. 67 (1945) 2217-2218).

Die oxidative Polymerisation der 3,4-disubstituierten Thiophene der Formel (II) durch chemische Oxidation wird je nach verwendetem Oxidationsmitel und gewünschter Reaktionszeit im allgemeinen bei Temperaturen von -10 bis + 250°C, bevorzugt bei Temperaturen von 0 bis 200°C, vorgenommen.

Als unter den Reaktionsbedingungen inerte organische Lösungsmittel seien vor allem genannt: aliphatische Alkohole wie Methanol, Ethanol und Propanol; aliphatische Ketone wie Aceton und Methylethylketon; aliphatische Carbonsäureester wie Essigsäureethylester und Essigsäurebutylester, aromatische Kohlenwaserstoffe wie Toluol und Xylol; aliphatische Kohlenwasserstoffe wie Hexan, Heptan und Cyclohexan, Chlorkohlenwasserstoffe wie Dichlormethan und Dichlorethan; aliphatische Nitrile wie Acetonitril; aliphatische Sulfoxide und Sulfone wie Dimethylsulfoxid und Sulfolan; aliphatische Carbonsäureamide wie Methylacetamid und Dimethylformamid, aliphatische und araliphatische Ether wie Diethylether und Anisol. Weiterhin kann auch Wasser oder Gemische aus Wasser mit den vorgenannten organischen Lösungsmitteln als Lösungsmittel verwendet werden.

Als Oxidationsmittel werden die nachstehend genannten, für die oxidative Polymerisation von Pyrrol geeigneten Oxidationsmittel verwendet; diese sind beispielsweise in J. Am. Chem. Soc. 85, 454 (1963) beschrieben. Im erfindungsgemäßen Verfahren werden aus praktischen Gründen preiswerte und leicht handhabbare Oxidationsmittel eingesetzt, nämlich Eisen-III-Salze wie FeCl₃, Fe(ClO₄)₃ und die Eisen-III-Salze organischer Säuren und organische Reste aufweisender anorganischer Säuren, ferner H₂O₂, K₂Cr₂O₇, Alkali- und Ammoniumpersulfate, Alkaliperborate und Kaliumpermanganat.

Die oxidative Polymerisation der Thiophene der Formel (II) erfordert theoretisch je Mol Thiophen 2,25 Äquivalente Oxidationsmittel (siehe z.B. J. Polym. Sc. Part A, Polymer Chemistry Vol. 26, S. 1287 (1988). Praktisch wird das Oxidationsmittel jedoch in einem gewissen Überschuß, z.B. einem Überschuß von 0,1 bis 2 Äquivalenten je Mol Thiophen angewendet.

Die Verwendung der Persulfate und der Eisen-III-Salze organischer Säuren und der organische Reste aufweisenden anorganischen Säuren hat die großen anwendungstechnischen Vorteile, daß sie nicht korrosiv wirken und vor allem, daß mit ihnen die Oxidation der 3,4-disubstituierten Thiophene der Formel (II) so langsam verläuft, daß man Thiophene und Oxidationsmittel zusammen aus einer Lösung bzw. einer Druckpaste auf das antistatisch auszurüstende Substrat aufbringen kann. Nach dem Aufbringen der Lösung bzw. der Paste läßt sich die Oxidation durch Erwärmcn des beschichteten Substrats beschleunigen.

Mit den anderen vorstehend genannten Oxidationsmitteln wie FeCl₃, H₂O₂, oder Perboraten, verläuft die oxidative Polymerisation so schnell, so daß ein getrenntes Aufbringen von Oxidationsmittel und Thiophen auf das auszurüstende Subtrat erforderlich, ein Erwärmen dagegen nicht mehr nötig ist.

Als Eisen-III-Salze organische Reste aufweisender anorganischer Säuren seien beispielsweise die Eisen-III-Salze der Schwefelsäurehalbester von C₁-C₂₀-Alkanolen, z.B. das Fe-III-Salz des Laurylsulfates genannt.

Als Eisen-III-Salze organischer Säuren seien beispielsweise genannt: die Fe-III-Salze von C₁-C₂₀-Alkylsulfonsäurem, wie der Methan- und der Dodecansulfonsäure; aliphatischen C₁-C₂₀-Carbonsäurem wie der 2-Ethylhexylcarbonsäure, aliphatische Perfluorcarbonsäuren, wie der Trifluoressigsäure und der Perfluoroctansäure; aliphatischen Dicarbonsäurem, wie der Oxalsäure und vor allem von aromatischen, gegebenenfalls durch C₁-C₂₀-Alkylgruppen substituierten Sulfonsäuen wie der Benzolsulfonsäure, p-Toluolsulfonsäure und der Dodecylbenzolsulfonsäure.

Es können auch Gemische dieser vorgenannen Fe-III-Salze organische Säuren eingesetzt werden.

Bei getrennter Aufbringung von Thiophen und Oxidationsmittel kann das antistatisch auszurüstende Substrat zunächst mit der Lösung des Thiophens und anschließend mit der Lösung des Oxidationsmittels oder zunächst mit der Lösung des Oxidationsmittels und anschließend mit der Lösung des Thiophens behandelt werden. Bei gemeinsamer Aufbringung von Thiophen und Oxidationsmittel wird das auszurüstende Substrat nur mit einer Thiophen und Oxidationsmittel enthaltenden Lösung beschichtet. Da beim gemeinsamen Aufbringen ein Teil des Thiophens verdunstet, versetzt man die Lösungen mit einer dem zu erwartenden Thiophen-Verlust entsprechend geringeren Oxidationsmittel-Menge.

Die Lösungen können außerdem in organischen Lösungsmitteln lösliche organische Bindemittel enthalten, wie Polyvinylacetat, Polycarbonat, Polyvinylbutyrat, Polyacrylsäureester, Polymethacrylsäureester, Polystyrol, Polyacrylonitril, Polyvinylchlorid, Polybutadien, Polyisopren, Polyether, Polyester, Silicone und in organischen Lösungsmitteln lösliche Pyrrol/Acrylsäureester-, Vinylacetat/Acrylsäureester- und Ethylen/Vinylacetat-Copolymerisate. Auch in Waser lösliche Bindemittel wie Polyvinylalkohole sind als Verdickungsmittel verwendbar.

Die auf die auszurüstenden Substrate aufzubringenden Lösungen enthalten vorzugsweise 1 bis 30 Gew.-% des Thiophenderivats der Formel (II) und 0 bis 30 Gew.-% Bindemittel, beide Gewichtsprozente bezogen auf das Gesamtgewicht der Lösung.

Die Lösungen werden nach bekannten Verfahren, z.B. durch Aufsprühen, Aufrakeln, Bestreichen oder Bedrucken auf die Substrate aufgebracht.

Als Substrate, die nach dem erfindungsgemäßen Verfahren antistatisch bzw. elektrisch-leitfähig ausgerüstet werden, seien vor allem Formkörper aus organischen Kunststoffen, insbesondere Folien aus Polycarbonaten, Polyamiden, Polyethylenen, Polypropylenen, Polyvinylchlorid und Polyestern genannt.

Die Schichtdicke der aufgebrachten Beschichtung nach dem Trocknen beträgt in Abhängigkeit von der gewünschten Leitfähigkeit und der gewünschten Transparenz der Beschichtung im allgemeinen 0,1 bis 100 µm.

Das Entfernen der Lösungsmittel nach dem Aufbringen der Lösungen kann durch einfaches Abdampfen bei Raumtemperatur erfolgen. Zur Erzielung höherer Verarbeitungsgeschwindigkeiten ist es jedoch vorteilhafter, die Lösungsmittel bei erhöhten Temperaturen, z.B. bei Temperaturen von 20 bis zu 250°C, bevorzugt 40 bis zu 200°C, zu entfernen. Das Entfernen der Lösungsmittel bei erhöhter Temperatur ist auch deshalb vorteilhafter, weil gefunden wurde, daß sich die elektrische Leitfähigkeit der antistatischen Beschichtung durch eine thermische Nachbehandlung der Beschichtungen bei Temperaturen von 50 bis 250°C, vorzugsweise von 100 bis 200°C, wesentlich, nämlich um bis zu einer Zehnerpotenz, erhöhen läßt. Die thermische Nachbehandlung kann unmittelbar mit dem Entfernen des Lösungsmittels verbunden oder aber auch in zeitlichem Abstand von der Fertigstellung der Antistatik-Beschichtung vorgenommen werden.

Die Dauer der Wärmebehandlung beträgt in Abhängigkeit von Form und Material des beschichteten Kunststoff-Formteils und Art des für die Beschichtung verwendeten Polymers 5 Sekunden bis 5 Minuten.

Die Wärmebehandlung kann z.B. in der Weise ausgeführt werden, daß man das beschichtete Kunststoff-Formteil mit einer solchen Geschwindigkeit durch eine auf der gewünschten Temperatur befindliche Wärmekammer bewegt, so daß die gewünschte Verweilzeit bei der gewählten Temperatur erreicht wird, oder mit einer auf der gewünschten Temperatur befindlichen Heizplatte für die gewünschte Verweilzeit in Kontakt bringt.

Bei der Verwendung des erfindungsgemäßen Verfahrens für die antistatische Ausrüstung von Kunststoff-Folien besteht eine technisch besonders interessante Ausführungsform darin, die Wärmebehandlung der beschichteten Folien mit einer mechanischen Verformung der Folien zu verbinden. Eine solche gleichzeitige Wärmebehandlung und mechanische Verformung findet bei der Herstellung von Kunststoff-Formteilen aus Kunststoff-Folien durch Tiefziehen der Folien statt.

Nach dem Entfernen der Lösungsmittel (Trocknen) und vor der thermischen Nachbehandlung kann es vorteilhaft sein, das überschüssige Oxidationsmittel aus der Beschichtung mit Wasser auszuwaschen.

Mit Hilfe des erfindungsgemäßen Verfahrens zur antistatischen Ausrüstung lassen sich auf einfache Weise haftfeste und mechanisch widerstandsfähige Beschichtungen mit Oberflächenwiderständen bis zu 1 Ω erhalten.

Eine besonders vorteilhafte Ausführungsform des erfindungsgemäßen Verfahrens zur antistatischen Ausrüstung von Kunststoff-Formteilen, insbesondere von Kunststoff-Folien, besteht bei getrenntem Aufbringen von Thiophen und Oxidationsmittel darin, das antistatisch auszurüstende Kunststoff-Formteil zunächst mit einer Lösung des Oxidationsmittels in einem organischen Lösungsmittel, die ein in Wasser unlösliches bzw. nur schwer lösliches organisches Bindemittel enthält, zu beschichten, das organische Lösungsmittel aus dieser Beschichtung zu entfernen, das mit dem Oxidationsmittel beschichtete Kunststoff-Formteil mit einer Lösung des Thiophens in einem solchen organischen Lösungsmittel zu behandeln, das weder das antistatisch auszurüstende Kunststoff-Material löst noch das auf die Kunststoff-Oberfläche aufgebrachte Bindemittel und das Oxidationsmittel; auch nach dieser Behandlung wieder das organische Lösungsmittel aus der auf das Formteil aufgebrachten Schicht zu entfernen und die so erhaltene Beschichtung abschließend durch Waschen mit Wasser von nicht polymer-gebundenen anorganischen Verbindungen, z.B. unverbrauchtem Oxidationsmittel, zu befreien.

Beim gemeinsamen Aufbringen von Thiophen und Oxidationsmittel wird die nach dem Entfernen des Lösungsmittels erhaltene Beschichtung vor allem dann mit Wasser ausgewaschen, wenn als Oxidationsmittel Eisen-III-Salze verwendet wurden und diese Eisen-Salze in der Beschichtung bei der weiteren Verwendung der antistatisch ausgerüsteten Kunststoff-Formteile stören; dies ist z.B. bei der Verwendung von antistatisch ausgerüsteten Folien für die Verpackung elektronischer Bauteile der Fall.

Das erfindungsgemäße Verfahren eignet sich besonders zur Herstellung antistatisch ausgerüsteter Kunststoff-Folien z.B. aus Polyestern, Polycarbonaten und Polyamiden. Diese erfindungsgemäß antistatisch ausgerüsteten Kunststoff-Folien eignen sich wegen ihrer Transparenz und dauerhaften, auch unter mechanischer und thermischer Belastung beständigen antistatischen Eigenschaften, zur Herstellung von transparenten Verpackungsteilen durch Tiefziehen. Das erfindungsgemäße Verfahren eignet sich ferner zur Herstellung von bedruckten Leiterplatten für die Elektronikindustrie. Zur Herstellung werden Kunststoffplatten mit die erfindungsgemäß zu verwendenden Thiophenderivate der Formel (II) und die entsprechenden Oxidationsmittel enthaltenden, gegebenenfalls verdickten Lösungen bedruckt.

Die Thiophene der Formel (II) können auch mit anderen polymerisierbaren Heterocyclen, z.B. mit Pyrrol, copolymerisiert werden. Es wurde gefunden, daß sich die mechanischen Eigenschaften der Polythiophen-Filme verbessern lassen, ohne ihre vorteilhaften elektrischen Eigenschaften zu beeinträchtigen, wenn man dic Alkylendioxythiophene der Formel (II) mit 1 bis 60 Gew.-% Pyrrol, (Gew.-% bezogen auf das Gesamtgewicht der zu polymerisierenden Monomere) copolymerisiert.

Der Einsatz von Polythiophcnen in wiederaufladbaren Batterien ist an sich bekannt (siehe z.B. ACTUAL. CHIM. 10 (1985) 15 bis 23; J. APPL. ELEKTROCHEM. 17 (1987) 607 bis 612). In der zweitgenannten Druckschrift wird jedoch auf die geringe Stabilität der Polythiophene und in SYNTH. METALS 18 (1987) 625 bis 630 darauf hingewiesen, daß die Polythiophene beim Einsatz als Elektrodenmaterial für wiederaufladbare Batterien bezüglich ihrer Stabilität Polypyrrol deutlich unterlegen sind.

Überraschenderweise wurde jedoch gefunden, daß die erfindungsgemäß hergestellten Poly-3,4-disubstituierten Thiophene nicht nur anderen Polythiophenen sondern sogar auch Polypyrrol in ihrer Stabilität eindeutig überlegen sind und sich deshalb sehr gut zum Einsatz als Elektrodenmaterial für wiederaufladbare Batterien eignen. Es wurde gefunden, daß diese Polythiophene eine geringere Selbstentladungsrate aufweisen und sich häufiger auf-und entladen (= besser cyclisieren) lassen als Polypyrrol. Die erhöhte Stabilität macht es sogar möglich, die Polythiophene in wasserhaltigen Elektrolytsystemen, z.B. auch in Alkali-Batterien, einzusetzen.

Darüber hinaus kann man aber auch die Polythiophene unter Zusatz von polymeren Bindemitteln und gegebenenfalls feinteiligen, leitfähigen Materialien wie Leitfähigkeitsrußen, leitfähigem, mit Indium oder Antimon dotiertem Zinndioxid, Metallpulvern oder Metallflakes zu Formteilen verarbeiten und diese Formteile in den Batterien einsetzen.

### Beispiele

### Beispiel 1

Die Lösung von 8,11 g FeCl₃ in 100 ml Acetonitril wird bei 0°C unter Rühren mit 2,84 g 3,4-Dioxyethylen-thiophen versetzt. Nach kurzem Nachrühren wird der Niederschlag abgesaugt, mit Acetonitril gewaschen und abschließend getrocknet.

Ausbeute: 1,1 g,
elektrische Leitfähigkeit des Pulverpreßlings: 2,3 S/cm (bestimmt nach der Vierpunkt-Methode).

Beim Versetzen des grünlichblauen klaren Filtrates mit 100 ml Cyclohexan wird noch eine weitere Fraktion Poly-(3,4-dioxyethylen)-thiophen erhalten.

Ausbeute: 1,33 g,
elektrische Leitfähigkeit des Pulverpreßlings:
3,7 x 10⁻² S/cm (bestimmt nach der Vierpunkt-Methode).

### Beispiel 2

Die Lösung von 1 g 3,4-Ethylendioxy-thiophen und 5 g Eisen-III-p-toluolsulfonat in 45 g eines 1:1-Isopropanol/Aceton-Gemisches wird mit einem Handcoater auf eine Polycarbonat-Folie aufgetragen (Naßfilmdicke: etwa 25 µm entsprechend einer Trockenfilmdicke von etwa 3 µm). Nach dem Entfernen des Lösungsmittels bei Raumtemperatur wird die beschichtete Folie noch 12 Stunden gelagert. Sie weist dann einen Oberflächenwiderstand (R_{OB}) von 100 Ω auf.

Eine Probe der so erhaltenen Folie wird 10 Minuten auf 180°C erwärmt. Die Probe weist anschließend nach dem Abkühlen einen Oberflächenwiderstand (R_{OB}) von 60 Ω auf.

### Beispiel 3

Die Lösung von 1 g 3,4-Ethylendioxy-thiophen, 5 g Eisen-III-p-toluolsulfonat und 5 g Polyvinylacetat in 25 g eines 1:1-Isopropanol/Aceton-Gemisches wird mit einem Handcoater auf eine Polycarbonat-Folie bei Raumtemperatur aufgetragen. Die Folie wird bis zur Gewichtskonstanz bei Raumtemperatur getrocknet.

Die so erhaltene Folie weist einen Oberflächenwiderstand (R_{OB}) von 1000 Ω auf.

Eine Probe der Folie wird 10 Sekunden auf 180°C erhitzt; die Folie weist dann einen Oberflächenwiderstand (R_{OB}) von 120 Ω auf. Sowohl die bei Raumtemperatur als auch die bei 180°C nachbehandelte Folie ist transparent.

### Beispiel 4

Eine Lösung von 1 g 3,4-Ethylendioxy-thiophen, 2 g Eisen-III-p-toluolsulfonat und 5 g Polyvinylacetat in 45 g eines 1:1-Isopropanol/Aceton-Gemisches wird mit einem Handcoater auf eine PVC-Folie aufgetragen (Naßfilmdicke: etwa 25 µm entsprechend Trockenfilmdicke von etwa 3,5 µm). Die Folie wird bis zur Gewichtskonstanz bei Raumtemperatur getrocknet (15 Stunden). Der Oberflächenwiderstand (R_{OB}) der Folie beträgt 420 Ω.

Durch Erhitzen der mit der Lösung beschichteten Folie auf 50°C läßt sich die Trockenzeit auf 1 Stunde verkürzen.

### Beispiel 5

Die Suspension von 0,5 g Polyvinylalkohol, 0,3 g Ammoniumperoxodisulfat und 0,5 g 3,4-Ethylendioxy-thiophen in 10 ml entsalztem Wasser wird auf eine Polyester-Folie aufgerakelt (Naßfilmdicke: etwa 25 µm entsprechend einer Trockenfilmdicke von etwa 2,5 µm). Zum Entfernen des Wassers wird die eine Hälfte der Folie bei Raumtemperatur bis zur Gewichtskonstanz gelagert (15 Stunden); die andere Hälfte 1 Stunde auf 60°C erwärmt.

Beide Folienhälften weisen einen Oberflächenwiderstand (R_{OB}) von 8 x 10³ Ω auf.

Diese antistatisch ausgerüstete Folie eignet sich z.B. als Träger für fotografische Filme.

### Beispiel 6

Eine Lösung aus 0,6 g FeCl₃, 1 g Polyvinylacetat und 19 g Aceton wird auf eine Polyamidfolie mit einem Handcoater aufgerakelt (Naßfilmdicke: etwa 25 µm entsprechend einer Trockenfilmdicke von etwa 1-2 µm). Nach dem Entfernen des Lösungsmittels (Trocknen) wird die beschichtete Folie 2 Sekunden in eine 5 %ige Lösung von 3,4-Ethylendioxy-thiophen in einem (1:1-)-n-Hexan/Toluol-Gemisch) getaucht. Nach dem Trocknen bei Raumtemperatur wird die beschichtete Folie mit fließendem Wasser gewaschen, bis das Waschwasser praktisch keine Fe³⁺-Ionen mehr enthält.

Es wird eine transparente Folie erhalten; Oberflächenwiderstand (R_{OB}) der Folie: etwa 10³ Ω.

### Beispiel 7

Eine Lösung aus 0,25 g 3,4-Ethylendioxy-thiophen, 1 g Eisen-III-p-toluolsulfonat und 1 g Polyvinylacetat in 18 g eines 2:1-Isopropanol/Aceton-Gemisches wird auf eine Polycarbonat-Folie mit einem Handcoater aufgerakelt (Naßfilmdicke: etwa 25 µm entsprechend einer Trockenfilmdicke von 1 bis 2 µm). Nach dem Entfernen des Lösungsmittels (Trocknen) bei 60 bis 80°C wird die beschichtete Folie mit fließendem Wasser gewaschen, bis das Waschwasser praktisch keine Fe³⁺-Ionen mehr enthält.

Es wird eine transparente Folie erhalten; Oberflächenwiderstand (R_{OB}) der Folie: 350 Ω.

Eine Probe der Folie wird 5 Sekunden auf 180°C erhitzt. Der Oberflächenwiderstand der Folie sinkt durch diese thermische Behandlung auf (R_{OB}): 20 Ω.

### Beispiel 8

Die Lösung von 10 g Polyvinylacetat und 20 g Eisen-III-tosylat in 100 g Isopropanol und 50 g Aceton wird mit einem Handcoater auf eine Polycarbonatfolie (Dicke: 200 µm) aufgerakelt. Die Folie wird bis zur Gewichtskonstanz bei Raumtemperatur getrocknet. Die Trockenfilmdicke der Beschichtung beträgt etwa 1 µm.

Die so beschichtete Folie wird anschließend in drei gleich große Teilstücke zerschnitten. Die einzelnen Stücke werden 5 Sekunden lang
das 1. Teilstück in eine 5 %ige Lösung von Pyrrol in Cyclohexan (Folie A),
das 2. Teilstück in eine 5 %ige Lösung von 3,4-Ethylendioxy-thiophen in Cyclohexan (Folie B) und
das 3. Teilstück in eine 5 %ige Lösung von 3,4-Propylen-1,2-dioxy-thiophen (Folie C) getaucht.

Die drei Folienproben A, B und C werden bei Raumtemperatur bis zur Gewichtskonstanz getrocknet und anschließend in fließendem Wasser gewaschen, bis im Waschwasser praktisch keine Eisen-III-ionen mehr nachweisbar sind.

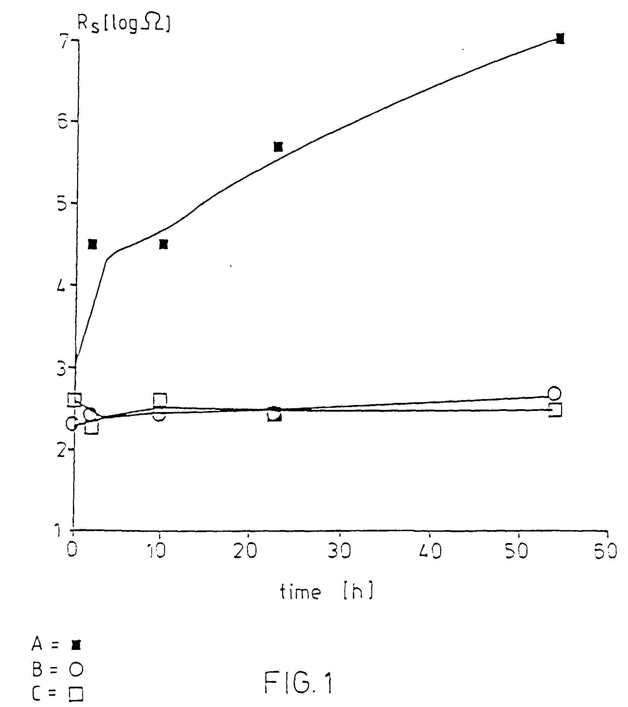

Anschließend werden die Folienstücke A, B und C bei 90 bis 100°C in einer gesättigten Wasserdampfatmosphäre gealtert und ihr Oberflächenwiderstand in Abhängigkeit von der Zeit bestimmt. Die für die einzelnen Folienstücke erhaltenen Meßwerte sind im Diagramm in Figur 1 aufgetragen. Aus den für die einzelnen Folienproben erhaltenen Kurven ist die hohe Hydrolysebeständigkeit der Antistatikbeschichtungen erkennbar, die mit den erfindungsgemäß hergestellten Polythiophenen erhalten wurden. Aus dem Diagramm ist ersichtlich, daß sich der Oberflächenwiderstand der mit den Polythiophenen ausgerüsteten Makrolonfolie praktisch nicht ändert, während der Oberflächenwiderstand der mit Polypyrrol ausgerüsteten Makrolonfolie schon nach kurzer Zeit stark ansteigt.

In einem anderen Versuch wurde je ein Streifen der Folie A und der Folie B (Maße der Streifen: 2 cm x 5 cm) mit Kontakten aus Leitsilber versehen (Abstand der beiden Kontakte voneinander: 4 cm).

Die beiden mit den Kontakten versehenen Streifen der Folien A und B wurden jeder für sich in ein mit 1N wässriger HCI gefülltes Becherglas getaucht. Anschließend wurde durch Zugabe von wässriger NaOH der pH-Wert der wässrigen HCl-Lösungen gleichmäßig gesteigert und gleichzeitig der elektrische Widerstand der Folienstreifen bei den verschiedenen pH-Werten bestimmt. Die Messungen ergaben, daß der elektrische Widerstand der Folie B über den pH-Wert Bereich von 1 bis 10 annähernd konstant bleibt, der Widerstand erhöht sich nur von 12,5 x 10² Ω bei pH 1 auf 17,5 x 10² Ω bei pH 10, während der Widerstand der Folie A stark ansteigt, nämlich von 4 x 10⁵ Ω bei pH 1 auf 5,5 x 10⁶ Ω bei pH 10.

## Patentansprüche

1. Verfahren zur Herstellung von Polythiophenen, aufgebaut aus Struktureinheiten der Formel 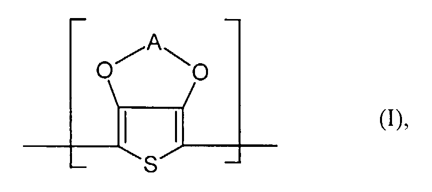 in der
A einen gegebenenfalls substituierten C₁-C₄-Alkylen-Rest bedeutet,
durch oxidative Polymerisation 3,4-disubstituierter Thiophene der Formel 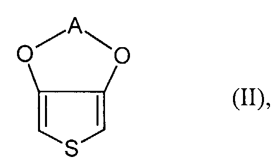 in der
A die unter Formel (I) angegebene Bedeutung hat,
wobei als Oxidationsmittel Fe(III)-Salze, H₂O₂, K₂Cr₂O₇, Alkaliperborate, KMnO₄, Alkali- oder Ammoniumpersulfate in Mengen von >2,25 Äquivalenten Oxidationsmittel pro Mol Thiophen eingesetzt werden, in einem unter den angewandten Reaktionsbedingungen inerten organischen Lösungsmittel und/oder Wasser.

2. Verfahren gemäß Anspruch 1, dadurch gekennzeichnet, daß A einen gegebenenfalls durch Alkylgruppen substituierten Methylen- oder einen gegebenenfalls durch C₁-C₁₂-Alkyl- oder Phenylgruppen substituierten Ethylen-1,2-Rest oder einen Cyclohexylen-1,2-Rest bedeutet.

3. Verfahren gemäß Anspruch 1, dadurch gekennzeichnet, daß A ein Ethylen-1,2-Rest ist.

4. Verfahren gemäß Anspruch 1, dadurch gekennzeichnet, daß bei der oxidativen Polymerisation als inertes organisches Lösungsmittcl aliphatische Alkohole, aliphatische Ketone, aliphatische Carbonsäureester, aromatische Kohlenwasserstoffe, aliphatische Kohlenwasserstoffe, Chlorkohlenwasserstoffe, aliphatische Nitrile, aliphatische Sulfoxide oder Sulfone, aliphatische Carbonsäureamide, aliphatische oder araliphatische Ether, Wasser oder Gemische von Wasser mit den vorgenannten Lösungsmitteln eingesetzt werden.

5. Verfahren zur antistatischen Ausrüstung von den elektrischen Strom nicht leitenden Kunststoff-Substraten, insbesondere von Kunststoff-Formteilen, durch Aufbringen einer Schicht aus elektrisch-leitfähigen organischen Polymeren auf die Oberfläche der Substrate, dadurch gekennzeichnet, daß man auf der Oberfläche der Substrate durch chemische oxidative Polymerisation gemäß Anspruch 1 eine Schicht aus Polythiophenen erzeugt, die aus Struktureinheiten der Formel 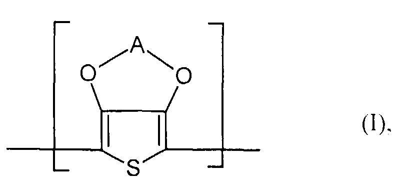 aufgebaut sind, in der
A einen gegebenenfalls substituierten C₁-C₄-Alkylen-Rest bedeutet.

6. Verfahren gemäß Anspruch 5, dadurch gekennzeichnet, daß A einen gegebenenfalls durch Alkylgruppen substituierten Methylen- oder einen gegebenenfalls durch C₁-C₁₂-Alkyl- oder Phenylgruppen substituierten Ethylen-1,2-Rest oder einen Cyclohexylen-1,2-Rest bedeutet.

7. Verfahren gemäß Anspruch 5, dadurch gekennzeichnet, daß A ein Ethylen-1,2-Rest ist.

8. Verfahren gemäß Anspruch 5, dadurch gekennzeichnet, daß man das Oxidationsmittel zusammen mit Methylen-, Ethylen-1,2-, oder Propylen-1,2-dioxythiophen in einer Lösung oder Druckpaste vereinigt auf das antistatisch auszurüstende Kunststoff-Substrat aufbringt.

## Claims

1. Process for the preparation of polythiophenes synthesised from structural units corresponding to the formula 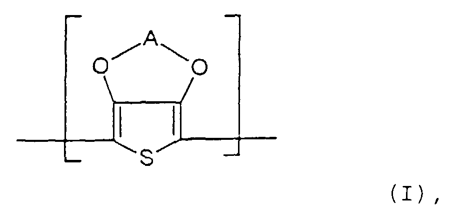 wherein
A denotes an optionally substituted C₁-C₄ alkylene group,
by oxidative polymerisation of 3,4-disubstituted thiophenes corresponding to the formula 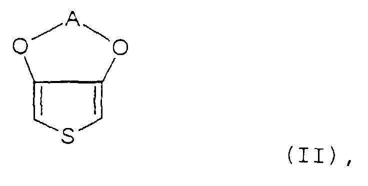 wherein
A has the meaning given under formula (I),
wherein the oxidising agents used are Fe(III) salts, H₂O₂, K₂Cr₂O₇, alkali metal perborates, KMnO₄, alkali metal persulfates or ammonium persulfate in quantities of >2.25 equivalents of oxidising agent per mol thiophene, in an organic solvent which is inert under the applied reaction conditions and/or water.

2. Process according to claim 1, characterised in that A denotes a methylene group optionally substituted by alkyl groups or an ethylene-1,2 group optionally substituted by C₁-C₁₂-alkyl groups or phenyl groups or a cyclohexylene-1,2 group.

3. Process according to claim 1, characterised in that A is an ethylene-1,2 group.

4. Process according to claim 1, characterised in that during the oxidative polymerisation the solvents used as inert organic solvent are aliphatic alcohols, aliphatic ketones, aliphatic carboxylic esters, aromatic hydrocarbons, aliphatic hydrocarbons, chlorinated hydrocarbons, aliphatic nitriles, aliphatic sulfoxides or sulfones, aliphatic carboxylic acid amides, aliphatic or araliphatic ethers, water or mixtures of water with the above-mentioned solvents.

5. Process for the antistatic finishing of plastics substrates, in particular of plastics mouldings, not conducting the electric current, by applying a layer composed of electrically conductive organic polymers to the surface of the substrates, characterised in that a layer of polythiophenes is produced on the surface of the substrates by chemical oxidative polymerisation according to claim 1, the polythiophenes being synthesised from structural units corresponding to the formula 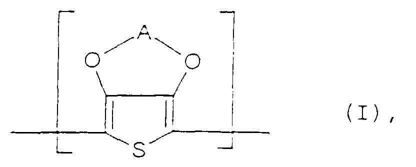 wherein
A denotes an optionally substituted C₁-C₄ alkylene group.

6. Process according to claim 5, characterised in that A denotes a methylene group optionally substituted by alkyl groups or an ethylene-1,2 group optionally substituted by C₁-C₁₂-alkyl groups or phenyl groups or a cyclohexylene-1,2 group.

7. Process according to claim 5, characterised in that A is an ethylene-1,2 group.

8. Process according to claim 5, characterised in that the oxidising agent together with methylenedioxythiophene, ethylene-1,2-dioxythiophene or propylene-1,2-dioxythiophene combined in a solution or printing paste are applied to the plastics substrate which is to be antistatically finished.

## Revendications

1. Procédé de préparation de polythiophènes constitués de motifs de structure de formule 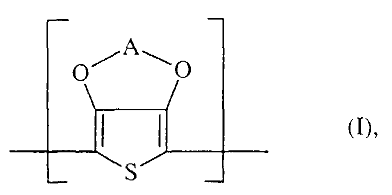 dans laquelle
A représente un groupe alkylène en C₁-C₄ éventuellement substitué,
par polymérisation oxydante de thiophènes 3,4-disubstitués de formule 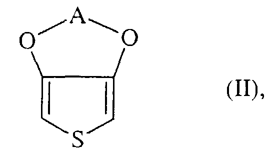 dans laquelle
A a les significations indiquées en référence à la formule (I),
avec utilisation en tant qu'agent oxydants de sels ferriques, d'H₂O₂, de K₂Cr₂O₇, de perborates alcalins, de KMnO₄, de persulfates alcalins ou d'ammonium, en quantité supérieure à 2,25 équivalents d'agent d'oxydant par mole de thiophène, dans un solvant organique inerte dans les conditions de réaction observées et/ou dans l'eau.

2. Procédé selon la revendication 1, caractérisé en ce que A représente un groupe méthylène éventuellement substitué par des groupes alkyle ou un groupe éthylène-1,2 éventuellement substitué par des groupes alkyle en C₁-C₁₂ ou phényle, ou un groupe cyclohexylène-1,2.

3. Procédé selon la revendication 1, caractérisé en ce que A représente un groupe éthylène-1,2.

4. Procédé selon la revendication 1, caractérisé en ce que, à la polymérisation oxydante, on utilise en tant que solvants organiques inertes des alcools aliphatiques, des cétones aliphatiques, des esters d'acides carboxyliques aliphatiques, des hydrocarbures aromatiques, des hydrocarbures aliphatiques, des hydrocarbures chlorés, des nitriles aliphatiques, des sulfoxydes ou sulfones aliphatiques, des carboxamides aliphatiques, des éthers aliphatiques ou araliphatiques, l'eau et/ou des mélanges d'eau et des solvants mentionnés.

5. Procédé pour l'apprêtage antistatique de supports de résines synthétiques, en particulier de pièces moulées en résines synthétiques, non conducteurs de l'électricité, par application d'une couche de polymère organique conducteur de l'électricité à la surface des supports, caractérisé en ce que l'on forme à la surface des supports, par polymérisation oxydante chimique selon la revendication 1, une couche de polythiophène constitué de motifs de structure de formule 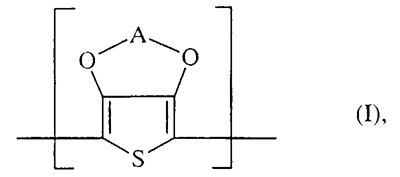 dans laquelle
A représente un groupe alkylène en C₁-C₄ éventuellement substitué.

6. Procédé selon la revendication 5, caractérisé en ce que A représente un groupe méthylène éventuellement substitué par des groupes alkyle ou un groupe éthylène-1,2 éventuellement substitué par des groupes alkyle en C₁-C₁₂ ou des groupes phényle, ou un groupe cyclohexylène-1,2.

7. Procédé selon la revendication 5, caractérisé en ce que A représente un groupe éthylène-1,2.

8. Procédé selon la revendication 5, caractérisé en ce que l'on applique l'agent oxydant combiné avec du méthylène-, de l'éthylène-1,2- ou du propylène-1,2-dioxythiophène dans une solution ou une pâte d'impression sur le support de résine synthétique soumis à l'apprêtage antistatique.
